# EUROPÄISCHE PATENTSCHRIFT

(11) **EP 2 769 621 B1**
(45) Veröffentlichungstag und Bekanntmachung des Hinweises auf die Patenterteilung: **18.04.2018**
(21) Anmeldenummer: 14156516.8
(22) Anmeldetag: 25.02.2014
(51) Int. Cl.: A21C 1/06, B01F 7/08

(54) **Anordnung von dichtschließenden Förderschnecken**
Arrangement of tightly closed screw conveyors
Agencement de vis sans fin d'alimentation à fermeture étanche

(30) Priorität: 26.02.2013 DE 202013001817 U
(43) Veröffentlichungstag der Anmeldung: 27.08.2014
(73) Patentinhaber: VEMAG Maschinenbau GmbH, 27283 Verden/Aller (DE)
(72) Erfinder: Nilsson, Kersten, 27283 Verden (DE); Bär, Prof.Dr. Gert, 01219 Dresden (DE)
(74) Vertreter: Eisenführ Speiser

(56) Entgegenhaltungen:
- CN-U- 202 062 635
- DE-A1- 1 529 834
- DE-U1-202011 003 212
- JP-A- S5 656 841
- JP-U- S5 716 329
- US-A- 3 929 323

## Beschreibung

Die Erfindung bezieht sich auf eine Anordnung aus zwei drehbeweglich zueinander angeordneten Förderschnecken zur Verarbeitung einer pastösen Masse, wie ein Lebensmittel-Produkt oder dergleichen, mit einer ersten Förderschnecke und einer zweiten Förderschnecke, die ineinander greifende, schraubenförmige Wendeln aufweisen und insbesondere gegenläufig antreibbar sind.

Es sind Anordnungen bekannt, die beispielsweise zur automatisierten Verarbeitung von pastösen Massen, wie Teigwaren, Wurstbrät oder dergleichen, eingesetzt werden. Dabei wird die pastöse Masse, auch als Lebensmittel- Produkt bezeichnet, während der Verarbeitung mittels der bekannten Förderschnecken-Anordnungen häufig gemischt, gleichzeitig in eine vorgegebene Förderrichtung versetzt und gegebenenfalls auch portioniert. Zu diesem Zweck sind zwei Förderschnecken, auch als Förderkurven bezeichnet, mit ihren insbesondere schraubenförmigen Wendeln drehbeweglich zueinander angeordnet, wobei mit den ineinandergreifenden Wendeln die Masse beziehungsweise das Produkt in der Regel in Längsrichtung der Förderschnecken bewegt wird. Solche Anordnungen von Förderschnecken sind üblicherweise ein Bestandteil von Vorrichtungen zum Verarbeiten von Teig- und Wurstmassen, wobei die Vorrichtungen wiederum zum Beispiel innerhalb einer Vakuum-Füllmaschine zum Einsatz kommen. Mit derartigen Füllmaschinen wird aus der Masse ein fertiges Endprodukt hergestellt.

In der Vergangenheit kamen Anordnungen von Förderschnecken zur Anwendung, die verschiedene Profilformen, auch als C-, D- oder N-Profile bekannt, oder auch Kombinationen der vorgenannten Profilformen aufwiesen. Die bekannten Profilformen haben jedoch den Nachteil, dass zwischen den ineinander greifenden Wendeln der beiden Förderschnecken zum Teil relativ große Spalte vorhanden sind, sodass sie die Befüllungsräume der Förderschnecken zwischen den Wendeln nur unzureichend abdichten. Dies hat zur Folge, dass speziell bei hohen Drücken während der Verarbeitung zumindest ein Teil der durch die Anordnung zu fördernden Masse entgegen der eigentlichen Förderrichtung der Förderschnecken zurückströmt. Dadurch entsteht zum einen ein Wirkungsgradverlust und zum anderen wirkt sich das teilweise Zurückströmen nachteilig auf sowohl das Aussehen des fertigen Produktes als auch auf die Portioniergenauigkeit einer mit einer solchen Anordnung ausgerüsteten Füllmaschine aus.

US 3,929,323 offenbart einen Einzelschneckenextruder zur Verarbeitung von Kunststoffmaterial. Der Einzelschneckenextruder weist einen Förder-Gehäuseabschnitt mit einer Hauptförderschraube und einer Hilfsförderschraube auf. Die Hilfsförderschraube hat eine schraubenförmige Nut, die umgekehrt zur Schraubenlinie der Hauptförderschraube ausgebildet und drehbar in Eingriff mit der Hauptförderschraube gehalten ist, wobei zwischen dem Wendelschrauben-Gewindeabschnitt der Hauptförderschraube und der Hilfsförderschraube ein Antriebskontakt besteht.

Ausgehend von der obenstehenden Problematik liegt der Erfindung damit die Aufgabe zugrunde, eine Anordnung von Förderschnecken anzugeben, welche Nachteile aus dem Stand der Technik überwinden und mit denen insbesondere eine verbesserte Wirtschaftlichkeit erreicht ist.

Die Erfindung löst die ihr zugrunde liegende Aufgabe bei einer Anordnung aus zwei drehbeweglich zueinander angeordneten Förderschnecken der vorbezeichneten Gattung, indem erfindungsgemäß die Förderschnecken unterschiedlich große Durchmesser aufweisen und die Förderschnecken eine unterschiedliche Anzahl von Wendeln haben, und dass die Oberflächen der ineinander greifenden Wendeln so geformt und aufeinander abgestimmt sind, dass sie entlang einer im wesentlichen kontinuierlichen Berührungslinie, welche im Wesentlichen in Längsrichtung beider Förderschnecken verläuft, miteinander in Berührung stehen, um ein Zurückströmen der pastösen Masse zu behindern, vorzugsweise zu verhindern.

Der Erfindung liegt die Erkenntnis zugrunde, dass mithilfe von Förderschnecken, die unterschiedlich große Durchmesser aufweisen und eine unterschiedliche Anzahl von Wendeln haben, ineinandergreifende Förderschnecken mit untereinander dichtschließenden Förderschnecken-Profilen ausgebildet werden. Mittels der dichtschließenden Förderschnecken-Profile ist eine nahezu vollkommene Abdichtung der Befüllungsräume zwischen den Wendeln der einander benachbarten Förderschnecken gewährleistet. Zudem wird durch die vorzugsweise kontinuierliche beziehungsweise stetige Berührungslinie oder geringen Spaltmaße zwischen den drehbeweglich zueinander angeordneten Förderschnecken, auch bezeichnet als Förderkurven, bei bevorzugt gegenläufig bzw. gegensinnig antreibbaren Förderschnecken ein Zurückströmen des Lebensmittel-Fördergutes entgegen der Förderrichtung, insbesondere bei hohen Drücken in der Förderstrecke, behindert oder verhindert. Durch die im wesentliche durchgängige im Wesentlichen in Längsrichtung verlaufende Berührungslinie zwischen den Förderschnecken ist ein gleichmäßiges Fördern, Mischen und gegebenenfalls auch Portionieren der pastösen Masse, wie zum Beispiel Teig oder Wurstbrät ermöglicht, wodurch die Wirtschaftlichkeit der Füllmaschine wesentlich verbessert ist. Zudem ist die Portioniergenauigkeit der pastösen Lebensmittel-Masse im Anschluss an eine mittels der Förderschnecken ausgebildete Förderstrecke zum Beispiel beim Abfüllen erhöht. Die erste und zweite Förderschnecke der erfindungsgemäßen Anordnung weisen unterschiedlich große Durchmesser auf, und gleichzeitig haben die erste und die zweite Förderschnecke eine unterschiedliche Anzahl von Wendeln, wodurch sich eine entsprechende Anzahl von Gängen ergibt, durch welche die Lebensmittel-Masse entlang der Förderschnecke bewegt wird. Als Gänge werden jeweils die sich entlang der Förderschnecke zwischen den schraubenförmigen Wendeln erstreckenden Spalte bzw. Kanäle bezeichnet. Unter gegensinnig bzw. gegenläufig antreibbar ist das Bewegen der ersten und zweiten Förderschnecke mit entgegengesetzten Drehrichtungen zu verstehen.

Aufgrund der im wesentlichen kontinuierlichen Berührungslinie zwischen den beiden Förderschnecken untereinander sind Spalte zwischen den aufeinander abrollenden Förderschneckenoberflächen ganz oder weitgehend vermieden. In der Praxis können jedoch sehr geringe Spalte zwischen den Oberflächen der aufeinander abrollenden Förderschnecken existieren. Trotz der mitunter auftretenden geringen Spaltmaße kann auch bei hohen Drücken in der Förderstrecke während der Verarbeitung der Lebensmittel-Masse einem Zurückströmen der oder des zu fördernden Masse oder Produktes entgegengewirkt werden. Die kontinuierliche Abdichtung zwischen den Förderschnecken wirkt sich ebenfalls vorteilhaft auf das Aussehen des zu erzeugenden Produktes einer bevorzugt die erfindungsgemäße Anordnung aufweisenden Füllmaschine aus. Aufgrund der in der Praxis nahezu unvermeidbaren Fertigungsabweichungen an den Förderschnecken bzw. Förderkurven, werden die Förderschnecken mit Toleranzen gefertigt, die so aufeinander abgestimmt sind, dass vorzugsweise ein Übermaß im Bereich der Anlageflächen zwischen den Förderschnecken vermieden und damit ein aufeinander Reiben der Oberflächen ausgeschlossen werden kann. Bestenfalls werden die Förderschnecken derart groß gefertigt, dass kein Spalt zwischen diesen vorliegt und somit die theoretisch vollkommene Abdichtung zwischen den Förderschnecken, auch bezeichnet als Förderkurven, gewährleistet wird. Beispielweise besteht zwischen den Oberflächen der ersten und zweiten Förderschnecke ein geringer Spalt von wenigen zehntel oder hundertstel Millimetern, der ausreichend gering ist, um ein Zurückströmen zu be- oder verhindern.

Nach einer ersten Weiterbildung der Erfindung ist vorgesehen, dass die erste Förderschnecke bevorzugt zwei Wendeln und die zweite Förderschnecke vorzugsweise drei Wendeln aufweist. Mit dem Einsatz einer ersten Förderschnecke, auch bezeichnet als Haupt-Förderschnecke, mit zwei Wendeln und einer zweiten Förderschnecke, auch als Neben-Förderschnecke bezeichnet, mit drei Wendeln bzw. drei zwischen den Wendeln ausgebildeten Gängen ist überhaupt erst eine individuelle Anpassung der Förderschnecken-Profile aufeinander möglich. Aufgrund der bevorzugt exakt aufeinander abgestimmten Profile zwischen den bevorzugt parallel zueinander verlaufenden Förderschnecken kann dann ein im Wesentlichen vollständiges Abdichten gewährleistet werden. Bevorzugt weisen die Förderschnecken mit ihren ineinander greifenden, schraubenförmigen Wendeln einen Unterschied von wenigstens einer Wendel bzw. einem Gang zueinander auf. In anderen Ausführungsformen kann die erste Förderschnecke auch drei, vier oder fünf Wendeln aufweisen. Die mit der ersten Förderschnecke in Anlage stehende zweite Förderschnecke weist dabei vorzugsweise mindestens einen Gang bzw. Wendel mehr auf, als die erste Förderschnecke. Die zweite Förderschnecke umfasst dann entsprechend vier, fünf oder sechs Wendeln. Aufgrund der verschiedenen Anzahl von Wendeln an den Förderschnecken werden die erste Förderschnecke und die zweite Förderschnecke vorzugsweise mit unterschiedlichen Drehzahlen angetrieben,

Vorzugsweise weist die zweite Förderschnecke im Vergleich zur ersten Förderschnecke einen geringeren Außendurchmesser auf, womit auf vorteilhafte Weise ein Ausgleich hinsichtlich der unterschiedlichen Anzahl an Wendeln und den sich dadurch ergebenden verschiedenartigen Querschnittsprofilen an den Förderschnecken erzielt ist. Durch eine bevorzugte Kombination der unterschiedlichen Wendelanzahl an beiden Förderschnecken und deren unterschiedlich großen Außendurchmessern der ersten und zweiten Förderschnecke kann zu jedem Moment der Relativbewegung der gegensinnig drehenden Förderschnecken zueinander eine sich in Längsrichtung der Förderschnecken verlaufende, im wesentlichen zwischen deren Oberflächen dichtschließende Berührungslinie gewährleistet werden.

Bevorzugt verläuft die Berührungslinie im Wesentlichen in Längsrichtung beider Förderschnecken. Mit der bevorzugt im Wesentlichen in Längsrichtung verlaufenden Berührungslinie zwischen den Förderschnecken ist ein stetiger Kontakt der aufeinander abrollenden bzw. abgleitenden Oberflächen der Förderschnecken oder Förderkurven bewirkt und damit eine vorteilhaft zuverlässige Förderbewegung des dabei unter Umständen zu mischenden und am Ende der Förderbewegung zu portionierenden Produktes gewährleistet. Unter einer im Wesentlichen in Längsrichtung verlaufenden Berührungslinie ist auch eine Berührungslinie zu verstehen, die insbesondere kürzere Abschnitte aufweist, die bezogen auf die Längsachsen der Förderschnecken, vorzugsweise auch in zum Beispiel radialer oder tangentialer Richtung verlaufen.

Gemäß einer anderen Weiterbildung der Erfindung ist vorgesehen, dass die Oberflächen der Wendeln entlang der kontinuierlichen Berührungslinie bevorzugt im wesentlichen flächenhaft oder mit gemeinsamen Tangentialebenen miteinander in Berührung stehen. Die Wendeln der ersten und zweiten Förderschnecke sind derart geformt oder aufeinander abgestimmt, dass zwischen den Oberflächen der ersten und zweiten Förderschnecke vielmehr eine flächenartige Berührung gegeben ist, was eine bevorzugte Ausführungsform der erfindungsgemäßen Anordnung ist und damit die praktische Abdichtung der Befüllräume untereinander bewirkt wird. Damit ist eine an den aus dem Stand der Technik bekannten C-, D- und N-Profilen zweier Förderschnecken vorliegende abschnittsweise unterbrochene "kantenhafte" Berührung vermieden. Im Falle eines Flankenspiels zwischen den Oberflächen der beiden erfindungsgemäß ausgebildeten Förderschnecken wird dann die gemeinsame Tangentialebene in jedem Berührungspunkt der theoretischen Berührungslinie in zwei sich parallel im Abstand zueinander und zu dieser erstreckende Tangentialebenen zerlegt. Eine der Tangentialebenen liegt auf der ersten Förderschnecke und die andere Tangentialebene auf der zweiten Förderschnecke.

Bevorzugt setzt sich die Berührungslinie aus mehreren, aneinandergereihten Linienabschnitten zusammen, wobei die Linienabschnitte, bezogen auf die Rotationsachsen der Förderschnecken sich abwechselnd wenigstens etwa in axialer Richtung und im Wesentlich in radialer Richtung erstrecken. Mit der bevorzugten Unterteilung der Berührungslinie in mehrere aneinandergereihte Linienabschnitte ist eine vorteilhafte Erstreckung der Berührungslinie entlang der eine Vielzahl von unterschiedlichen Oberflächenabschnitten aufweisenden Förderschnecken in Längsrichtung erreicht. Die sich in axialer Richtung erstreckenden Linienabschnitte sind parallel zu den Rotationsachsen der Förderschnecken ausgerichtet. Die Linienabschnitte, die sich im Wesentlichen in radialer Richtung erstrecken weisen vorzugsweise jeweils, bezogen auf die Rotationsachsen der Förderschnecken, eine Ausrichtung auf, die sowohl eine vornehmlich radiale Komponente als auch eine axiale Komponente beinhaltet. Das Verhältnis zwischen der axialen Komponente und der radialen Komponente liegt in einem Bereich von bevorzugt 1:3.

Bevorzugt liegen die sich in axialer Richtung erstreckenden Linienabschnitte der Berührungslinie auf einer sich durch beide Rotationsachsen der Förderschnecke aufspannenden Verbindungsebene. Damit ist eine konstruktiv einfache Möglichkeit der Abdichtung zwischen insbesondere den äußeren Umfangsflächen der Wendeln der beiden achsparallel oder nicht achsparallel zueinander ausgerichteten Förderschnecken mit einem jeweils zugeordneten Grund zwischen den Wendeln der jeweils benachbarten Förderschnecke geschaffen. Die Umfangsflächen der Wendeln sind gleichzeitig die Umfangsflächen einer jeweiligen Förderschnecke.

Vorzugsweise sind an jeder Förderschnecke die sich axial erstreckenden Linienabschnitte jeweils über Flächenbereiche der äußeren Umfangsfläche der Wendeln und eines Grundes zwischen den Wendeln einer Förderschnecke verlaufend ausgebildet. Mit den sich achsparallel erstreckenden Oberflächenabschnitten der Wendeln kann eine vorteilhafte Abdichtung mit den jeweils unmittelbar in Berührung stehenden, ebenfalls achsparallel ausgerichteten Oberflächenbereichen eines Grundes der drehbeweglich zu einander angeordneten Förderschnecken umgesetzt werden. Speziell die äußeren Umfangsflächen der Wendeln beider Förderschnecken gelangen in der sich aufspannenden Verbindungsebene mit einem jeweiligen Grund zwischen den Wendeln in vorteilhaft abdichtende und fortwährende Berührung.

In einer bevorzugten Ausführung der Erfindung ist vorgesehen, dass die im wesentlichen radial ausgerichteten Linienabschnitte der Berührungslinie abwechselnd versetzt zu beiden Seiten der sich axial erstreckenden Linienabschnitte verlaufend ausgebildet sind, derart, dass die radial ausgerichteten Linienabschnitte bezogen auf die Rotationsachse einer Förderschnecke einen spitzen Winkel zueinander einschließen. Mit der abwechselnd versetzten Ausbildung bzw. Ausrichtung der radial ausgerichteten Linienabschnitte zu den axialen Linienabschnitten und damit zu der sich durch die axialen Linienabschnitte aufspannenden Verbindungsebene ist eine konstruktiv vorteilhafte Möglichkeit geschaffen um eine kontinuierliche bzw. stetige Berührungslinie zwischen den Förderschnecken auszubilden und gleichzeitig eine optimale Freigängigkeit der beiden Förderschnecken ohne große Reibungsverluste zueinander zu gewährleisten. Der Versatz zwischen den im Abstand zueinander ausgerichteten sich radial erstreckenden Linienabschnitten liegt bevorzugt in einem Winkelbereich kleiner 90 Grad.

Die im Wesentlichen in radialer Richtung ausgerichteten Linienabschnitte verlaufen über einen Flächenbereich etwa quer zur Erstreckungsrichtung der Wendelflanke, welche die Wendeln jeweils auf einer ihrer Seiten seitlich begrenzen. Die radial ausgerichteten Linienabschnitte verlaufen damit vorzugsweise auf dem kürzesten Wege von der einen Kante der Wendelflanke bis zur gegenüberliegenden Seite. Dabei sind die radial verlaufenden Linienabschnitte, welche über die in Förderrichtung weisenden Wendelflanken verlaufen, jeweils auf oder entlang einer Seite der sich aufspannenden Verbindungsebene angeordnet. Hingegen sind die radial ausgerichteten Linienabschnitte, welche über die von der Förderrichtung abgewandten Wendelflanken verlaufen, entlang der gegenüberliegenden Seite der Verbindungsebene angeordnet. Somit ergibt sich eine stetig wiederholende Anordnung der radial ausgerichteten Linienabschnitte zu beiden Seiten der sich aufspannenden Verbindungsebene.

Die sich axial erstreckenden Linienabschnitte und die zu den sich axial erstreckenden Linienabschnitten jeweils versetzt ausgebildeten, im Wesentlichen radial ausgerichteten Linienabschnitte sind untereinander bevorzugt über etwa tangential verlaufende Linienabschnitte verbunden. Mithilfe von tangential verlaufenden Linienabschnitten ist eine vorteilhaft einfache Verbindung zwischen den sich axial erstreckenden Linienabschnitten und den radial ausgerichteten Linienabschnitten zur Ausbildung der kontinuierlichen Berührungslinie ermöglicht.

Gemäß einer Weiterbildung der Erfindung erstrecken sich die tangential verlaufenden Linienabschnitte bereichsweise, zumindest parallel entlang einer Wendelaußenkante, welche die äußere Umfangs- oder Mantelfläche der Wendel von der Wendelflanke unterteilt, und entlang einer Wendelinnenkannte, welche den Grund zwischen der oder den Wendeln von der Wendelflanke abgrenzt. Der erfindungsgemäße Verlauf der tangential verlaufenden Linienabschnitte entlang einer Wendelaußen- und/oder Wendelinnenkante, stellt eine vorteilhaft einfache Möglichkeit zur Umsetzung der notwendigen Verbindung zwischen den axial und radial ausgerichteten Linienabschnitten dar. Eine unnötig aufwendige Ausbildung der die axial und radial ausgerichteten Linienabschnitte verbindenden tangential verlaufenden Linienabschnitte ist mit der Ausbildung entlang der Wendelinnen- und -außenkanten vermieden. Dadurch lässt sich die erfindungsgemäße Berührungslinie auf vorteilhaft vereinfachte Weise an zwei miteinander in Eingriff stehenden Förderschnecken erzeugen. Eine vorteilhaft abdichtende Anlage ist vorzugsweise zwischen den Wendelaußenkanten einer Wendel der ersten Förderschnecke oder Förderkurve und den damit korrespondierenden Wendelinnenkanten im Bereich eines Grundes zwischen zwei Wendeln der zweiten Förderschnecke oder Förderkurve gewährleistet. Neben der reinen tangentialen Bewegungskomponente weist jeder etwa tangential verlaufende Linienabschnitt, aufgrund der Steigung jeder schraubenförmig verlaufenden Wendel eine vernachlässigbare axiale Komponente im Verlauf auf.

Desweiteren ist vorgesehen, dass eine schraubenförmige Wendel einer ersten Förderschnecke bezogen auf einen Längsschnitt durch die Förderschnecke, Wendelflanken mit einer konvexen Krümmung aufweist. Mithilfe der konvexen Krümmung der Wendelflanken lässt sich eine bevorzugt abdichtende Anlage mit der korrespondierenden Wendelflanke der benachbart angeordneten Förderschnecke erzielen. Der Krümmungsradius ist dabei derart gewählt, dass ein radial ausgerichteter Linienabschnitt der in etwa in Längsrichtung der Förderschnecken verlaufenden Berührungslinie, bezogen auf eine sich durch die Rotationsachsen der drehbeweglich zueinander angeordneten Förderschnecken aufspannenden Verbindungsebene, jeweils abwechselnd nach rechts und links versetzt zu der sich aufspannenden Verbindungsebene ausgerichtet beziehungsweise angeordnet ist. Die erste Förderschnecke ist insbesondere die Hauptförderschnecke der erfindungsgemäßen Anordnung.

Nach einer anderen Weiterbildung der Erfindung ist eine schraubenförmige Wendel an der zweiten Förderschnecke vorgesehen, die im Längsschnitt, entlang der sich in Längsrichtung aufspannenden Verbindungsebene, Wendelflanken mit einer konkaven Krümmung aufweist. Die konkav ausgebildeten Wendelflanken weisen ein Krümmungsmaß auf, welches bevorzugt, an die korrespondierenden, konvex ausgebildeten Wendelflanken der ersten Förderschnecke angepasst ist. Zwischen beiden Förderschnecken ist somit eine Berührungslinie mit Linienabschnitten ausgebildet, die im Wesentlichen in Längsrichtung zwischen den Förderschnecken verläuft. Die zweite Förderschnecke ist vorzugsweise die mit der Hauptförderschnecke in Eingriff stehende Nebenförderschnecke der erfindungsgemäßen Anordnung.

Ein weiterer Aspekt der Erfindung betrifft eine Vorrichtung zum Verarbeiten eines Lebensmittels, insbesondere zum Herstellen eines Stranges aus einer pastösen Masse, mit einem Einlass, einem Auslass und einem sich zwischen dem Ein- und dem Auslass erstreckenden Förderweg und mit einer im Förderweg angeordneten Fördereinrichtung, welche zum Fördern des Lebensmittels vom Einlass in Richtung des Auslasses eingerichtet ist. Dabei ist erfindungswesentlich, dass die Fördereinrichtung eine erfindungsgemäße Anordnung von Förderschnecken nach einem der vorgenannten Ansprüche 1 bis 11 aufweist.

An einer derartig mit einer erfindungsgemäß ausgebildeten Anordnung aus zwei Förderschnecken beziehungsweise Förderkurven ausgerüsteten Vorrichtung zum Verarbeiten von Lebensmitteln ist, aufgrund der erfindungsgemäß kontinuierlichen Berührungslinie zwischen den Förderschnecken, nunmehr eine vorteilhaft vereinfachte Verarbeitung des Lebensmittels innerhalb der Vorrichtung erzielt. Während der Förderbewegung des vorzugsweise als pastöse Masse vorliegenden Lebensmittels durch die Vorrichtung, wobei neben dem Fördern mit den Förderschnecken die Masse bevorzugt gleichzeitig auch durchmischt und abschließend portioniert wird, ist ein Zurückströmen der in Förderrichtung versetzten Masse auf vorteilhafte Weise vermieden. Damit lässt sich der Verarbeitungsprozess des beispielsweise als Teig- oder Wurstware vorliegenden Lebensmittels mit Vorteil verbessern. Zudem ist, indem das Rückströmen von Einrückströmen der zu fördernden Masse entgegen der eigentlich Förderrichtung entgegengewirkt ist, ebenfalls auf vorteilhafte Weise die Portioniergenauigkeit der mit der erfindungsgemäßen Anordnung ausgerüsteten Vorrichtung zum Verarbeiten verbessert. Die erfindungsgemäße Anordnung von Förderschnecken, weist die Vorrichtung gemäß einer Ausführungsform Förderschnecken mit gleichmäßiger Steigung auf. In einer weiteren Ausführungsform sind die Förderschnecken entlang ihres Förderschneckenabschnittes mit mindestens zwei unterschiedlichen Steigungen ausgerüstet. Zudem weist die erfindungsgemäße Vorrichtung ein die Förderschnecken oder Förderkurven umgebendes Gehäuse mit einem Einlass und einem Auslass auf.

Gemäß einem weiteren Aspekt der Erfindung wird die eingangs genannte Aufgabe bei einer Füllmaschine zum Herstellen von Würstchen aus einer pastösen Masse, wie Wurstbrät oder dergleichen, gelöst. Die erfindungsgemäße Füllmaschine, vorzugsweise eine Vakuumfüllmaschine, ist mit einem Fülltrichter zum Aufnehmen der pastösen Masse ausgerüstet und weist eine Vorrichtung zum Verarbeiten eines Lebensmittels gemäß Anspruch 11 auf. Zudem ist die Füllmaschine mit einem Extrusionskopf zum Herstellen eines Stranges aus der pastösen Masse ausgerüstet und weist mindestens eine Abteileinrichtung zum Abteilen des geformten und mit einem Hüllmaterial überzogenen Stranges in einzelne Abschnitte unter Bildung einer Abteilstelle auf. Mit dem Einsatz einer erfindungsgemäß ausgebildeten Vorrichtung zum Verarbeiten eines Lebensmittels mit ihren eine stetige Berührungslinie zueinander aufweisenden Förderschnecken, lässt sich der Wirkungsgrad der vorzugsweise zur Anwendung kommenden Vakuum-Füllmaschine vorteilhaft verbessern. Die an der Vorrichtung zum Verarbeiten von Lebensmitteln, wie zum Beispiel einer Teigware oder einer Wurstware, eingesetzten Förderschnecken weisen bevorzugt parallel ausgerichtete Rotationsachsen auf. Gemäß einer Ausführungsform weisen die Förderschnecken zueinander geneigt ausgerichtete Rotationsachsen auf, so dass die Förderschnecken dann einen sich in eine der Längsrichtungen verjüngenden bzw. verringernden Umfang aufweisen.

Die Erfindung wird im Folgenden anhand der bevorzugten Ausführungsform und unter Bezugnahme auf die beiliegenden Figuren näher beschrieben. Hierbei zeigen:
- Figur 1:: eine Ansicht einer erfindungsgemäß ausgebildeten Hauptförderschnecke;
- Figur 2:: eine Darstellung einer erfindungsgemäßen Nebenförderschnecke;
- Figur 3:: eine Ansicht einer erfindungsgemäßen Anordnung zweier Förderschnecken im Längsschnitt, und
- Figur 4:: eine Ansicht der erfindungsgemäßen Anordnung nach Figur 2 im Querschnitt.

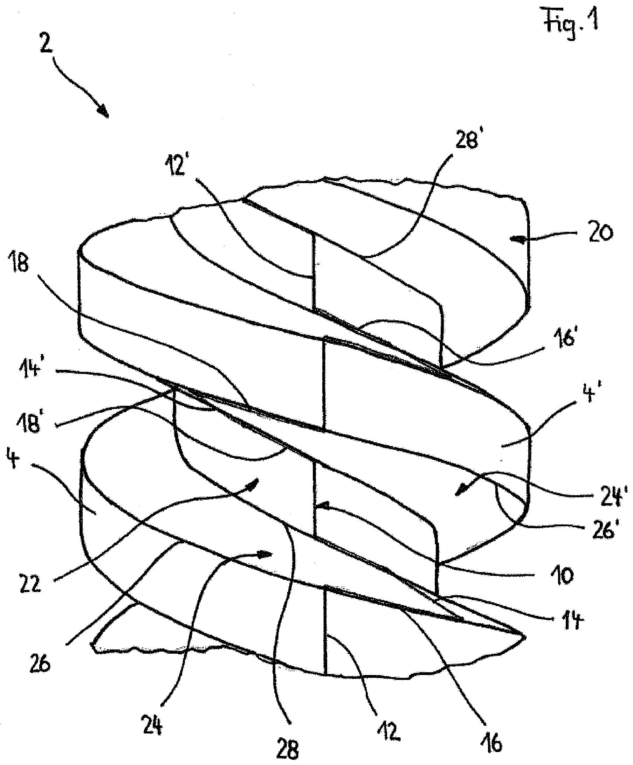

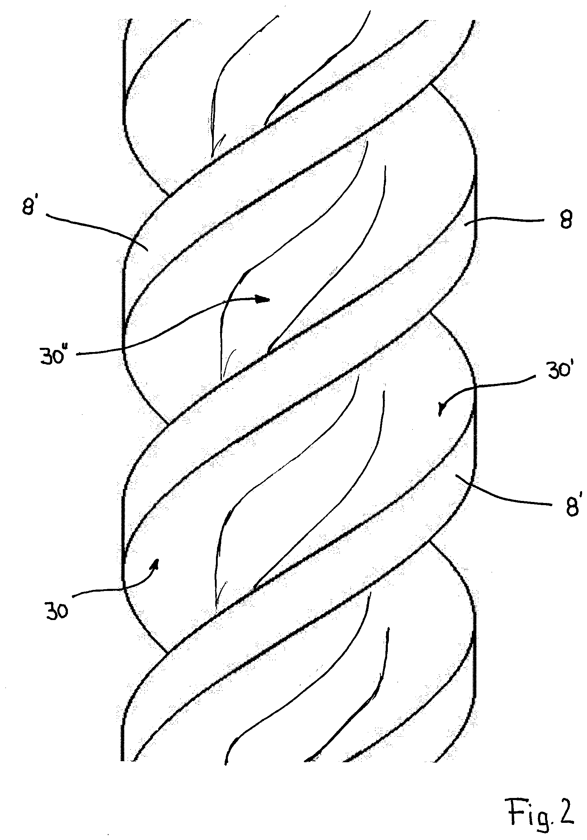

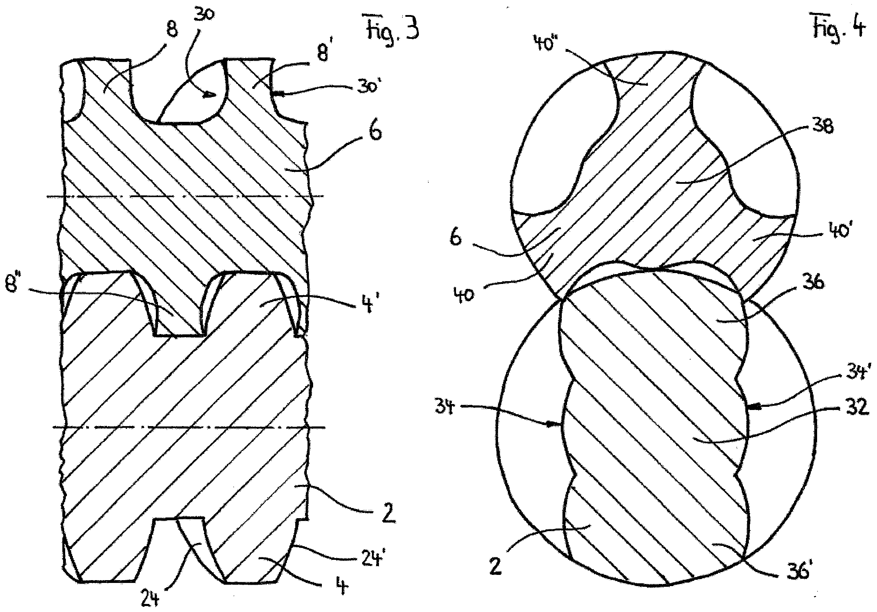

In Figur 1 ist eine perspektivische Ansicht einer erfindungsgemäß ausgebildeten Haupt-Förderschnecke 2 dargestellt, die zwei zueinander versetzt angeordnete schraubenförmige Wendeln 4, 4' aufweist. Dabei ist die Haupt-Förderschnecke 2, auch bezeichnet als erste Förderschnecke, im Betrieb einer Förderstrecke, was in den Figuren 3 und 4 gezeigt wird, mit einer zur besseren Veranschaulichung der Erfindung in Fig.1 nicht dargestellten Nebenförderschnecke 6 (Fig. 2) im Eingriff, welche drei Wendeln 8, 8', 8" aufweist. Die erste und zweite Förderschnecke 2, 6 werden bevorzugt gegensinnig angetrieben bzw. rotieren in entgegengesetzte Drehrichtungen. Zwischen der Hauptförderschnecke 2 und der Nebenförderschnecke 6, auch bezeichnet als zweite Förderschnecke, ist eine kontinuierliche beziehungsweise stetige Berührungslinie 10 ausgebildet, welche im Wesentlichen in Längsrichtung der beiden Förderschnecken 2, 6 verläuft. Die Oberflächen der ersten und zweiten Förderschnecke stehen entlang der kontinuierlichen Berührungslinie bevorzugt flächenhaft oder mit gemeinsamen Tangentialebenen miteinander in Berührung. Die Berührungslinie 10 setzt sich aus mehreren, aneinandergereihten Linienabschnitten 12, 12', 14, 14', 16, 16', 18, 18' zusammen, wobei sich die Linienabschnitte bezogen auf die Rotationsachse 19 der Haupt- oder Nebenförderschnecke 2, 6, in axialer Richtung erstrecken, in radialer Richtung ausgerichtet sind und in tangentialer Richtung verlaufen. Die sich axial erstreckenden Linienabschnitte 12, 12' liegen auf einer sich durch die Rotationsachsen 19 der ersten und zweiten Förderschnecke 2, 6 aufspannenden Verbindungsebene, wobei die sich axial erstreckenden Linienabschnitte 12, 12' über Flächenbereiche der äußeren Umfangsfläche 20 der Wendeln 4, 4' und eines Grundes 22 zwischen den Wendeln 4, 4' verlaufend ausgebildet ist. Die radial ausgerichteten Linienabschnitte 14, 14' erstrecken sich über einen Flächenbereich etwa quer zur Erstreckungsrichtung einer Wendelflanke 24, 24' verlaufend an den Wendeln 4, 4' der Hauptförderschnecke 2. Die im Wesentlichen radial ausgerichteten Linienabschnitte 14. 14' sind dabei abwechselnd zu beiden Seiten der sich axial erstreckenden Linienabschnitte 12, 12' ausgerichtet. Die sich axial erstreckenden Linienabschnitte und die radial ausgerichteten Linienabschnitte werden untereinander über etwa tangential verlaufende Linienabschnitte 16, 16', 18, 18' verbunden. Die tangential verlaufenden Linienabschnitte erstrecken sich bereichsweise, zumindest parallel entlang einer Wendelaußenkante 26, 26' und entlang einer Wendelinnenkante 28. 28' welche entweder die Umfangsfläche 20 oder den Grund 22 von den Wendelflanken 24, 24' unterteilen beziehungsweise abgrenzen. Die radial verlaufenden Linienabschnitte 14, 14' schließen zueinander, bezogen auf die Rotationsachse der Förderschnecke 2, einen spitzen Winkel ein.

Figur 2 zeigt die Nebenförderschnecke 6, auch als zweite Förderschnecke bezeichnet, mit ihren drei Wendeln 8, 8', 8", welche mit der Hauptförderschnecke 2 (Fig. 1) im Wesentlichen entlang einer kontinuierlichen Berührungslinie in ihren Längsrichtungen miteinander in Berührung steht. Dabei wird bevorzugt eine flächenhafte Berührung oder eine Berührung mit gemeinsamen Tangentialebenen zwischen den Oberflächen der beiden Förderschnecken 2, 6 erzeugt. Darüber ist ein Zurückströmen der geförderten Masse entgegen der Förderrichtung behindert, vorzugsweise verhindert. Die Wendelflanken 30, 30' und der Grund 30" der Nebenförderschnecke bzw. zweiten Förderschnecke 6 weisen jeweils zueinander einen bevorzugt kurvenförmigen Übergang mit einem gleichmäßigen oder sich auch verändernden Krümmungsradius auf. Wie in der Schnittdarstellung der Fig. 3 eindeutig zu erkennen, sind zwischen den Wendelflanken 30, 30' und dem Grund 30" der Nebenförderschnecke 6, im Gegensatz an der Hauptförderschnecke 2, somit keine kantenförmigen Übergänge vorhanden. Die in Figur 1 auf der Oberfläche der Hauptförderschnecke 2 abgebildete Berührungslinie 10 wird im gleichen Maße auf der Oberfläche der Nebenförderschnecke 6 abgebildet, welche jedoch zur Vereinfachung nicht näher dargestellt ist.

Wie der Figur 3 zu entnehmen, weisen die Wendelflanken 24, 24' der Hauptförderschnecke 2 eine konvexe Krümmung auf. Hingegen weisen die Wendelflanken 30, 30' der Wendeln 8, 8', 8" der Nebenförderschnecke 6 eine konkave Krümmung auf die jedoch entlang der Berührungslinie 10 eine dichtschließende Förderschnecken- oder Förderkurvenanordnung gewährleisten.

Wie aus Figur 4 ersichtlich, welche die Haupt- und Nebenförderschnecke 2, 6 im Querschnitt darstellt, weist die Förderschnecke 2 bevorzugt zwei Wendeln 4, 4' auf und die Nebenförderschnecke 6 ist mit drei Wendeln 8, 8', 8" ausgerüstet. Die Hauptförderschnecke 2 weist ein Mittelsegment 32 mit kreisförmig verlaufenden Seitenflächen 34, 34' auf. Aufeinander gegenüberliegenden Seiten des Mittelsegmentes 32 ist jeweils ein Randsegment 36, 36' angeordnet, welche Schnittbereiche der schraubenförmig um das Mittelsegment verlaufenden Wendeln 4, 4' und die äußere Umfangsfläche 20 der Wendeln 4, 4' der Hauptförderschnecke 2 abbilden. Die parallel dazu angeordnete Nebenförderschnecke 6 weist ebenfalls ein Mittelsegment 38 mit sich daran radial nach außen erstreckenden Wendelstegen 40, 40', 40" auf. Mit den Wendelstegen 40, 40', 40" sind ebenfalls die Schnittbereiche der sich schraubenförmig um das Mittelsegment legenden Wendeln 8, 8', 8" abgebildet. Die Nebenförderschnecke 6 weist im Vergleich zur Hauptförderschnecke 2 einen geringeren Außendurchmesser auf. Wie aus Figur 3 zudem ersichtlich bilden die ineinander greifenden Profile stets wenigstens einen Berührungspunkt aufeinander ab, wodurch ersichtlich wird, dass unabhängig von der Stellung der zueinander drehbeweglich angeordneten, ersten und zweiten Förderschnecken 2, 6 eine stetig beziehungsweise kontinuierliche Berührungslinie in Längsrichtung zwischen den Förderkurven sichergestellt ist. Somit ist auch bei hohen Drücken während eines Verarbeitungsprozesses in der Förderstrecke gewährleistet, dass die zu fördernde und gegebenenfalls auch gleichzeitig zu mischende Masse nicht entgegen der eigentlichen Förderrichtung zurückgedrückt wird.

## Patentansprüche

1. Anordnung aus zwei drehbeweglich zueinander angeordneten Förderschnecken (2, 6) zur Verarbeitung eines pastösen Lebensmittel-Produkts, mit einer ersten Förderschnecke (2) und einer zweiten Förderschnecke (6), die ineinander greifende, schraubenförmige Wendeln (4, 4', 8, 8', 8") aufweisen und insbesondere gegenläufig antreibbar sind,
**dadurch gekennzeichnet, dass** die Förderschnecken (2, 6) unterschiedliche große Durchmesser aufweisen und die Förderschnecken (2, 6) eine unterschiedliche Anzahl von Wendeln (4, 4', 8, 8', 8") haben,
und dass die Oberflächen der ineinander greifenden Wendeln (4, 4', 8, 8', 8") so geformt und aufeinander abgestimmt sind, dass sie entlang einer im wesentlichen kontinuierlichen Berührungslinie (10), welche im wesentlichen in Längsrichtung beider Förderschnecken (2, 6) verläuft, miteinander in Berührung stehen, um ein Zurückströmen der pastösen Masse zu behindern, vorzugsweise zu verhindern.

2. Anordnung nach Anspruch 1,
**dadurch gekennzeichnet, dass** die erste Förderschnecke (2) zwei Wendeln (4, 4') und die zweite Förderschnecke (6) drei Wendeln (8, 8', 8") aufweist.

3. Anordnung nach einem der Ansprüche 1 und 2,
**dadurch gekennzeichnet, dass** die zweite Förderschnecke (6) im Vergleich zur ersten Förderschnecke (2) einen geringeren Außendurchmesser aufweist.

4. Anordnung nach einem der Ansprüche 1 bis 3,
**dadurch gekennzeichnet, dass** die Oberflächen der Wendeln (4, 4', 8, 8', 8") entlang der kontinuierlichen Berührungslinie (10) flächenhaft oder mit gemeinsamen Tangentialebenen miteinander in Berührung stehen.

5. Anordnung nach Anspruch 1 bis 4,
**dadurch gekennzeichnet, dass** die Berührungslinie (10) aus mehreren, aneinandergereihten Linienabschnitten (12, 12', 14, 14', 16, 16', 18, 18') zusammengesetzt ist, wobei die Linienabschnitte (12, 12', 14, 14', 16, 16', 18, 18'), bezogen auf die Rotationsachsen (19) der Förderschnecken (2, 6), sich abwechselnd wenigstens in etwa axialer Richtung und im Wesentlichen in radialer Richtung erstrecken.

6. Anordnung nach Anspruch 5,
**dadurch gekennzeichnet, dass** die sich axial erstreckenden Linienabschnitte (12, 12') der Berührungslinie (10) auf einer sich durch beide Rotationsachsen (19) der Förderschnecken aufspannenden Verbindungsebene liegen.

7. Anordnung nach einem der Ansprüche 5 und 6,
**dadurch gekennzeichnet, dass** die sich axial erstreckenden Linienabschnitte (12, 12') jeweils über Flächenbereiche der äußeren Umfangsfläche (20) der Wendeln (4, 4') und eines Grundes (22) zwischen den Wendeln (4, 4') einer Förderschnecke (2, 6) verlaufend ausgebildet sind.

8. Anordnung nach einem der Ansprüche 5 bis 7,
**dadurch gekennzeichnet, dass** die im Wesentlichen radial ausgerichteten Linienabschnitte (14, 14') der Berührungslinie (10) abwechselnd versetzt zu beiden Seiten der sich axial erstreckenden Linienabschnitte (12, 12') verlaufend ausgebildet sind, derart, dass die radial ausgerichteten Linienabschnitte bezogen auf die Rotationsachse (19) einer Förderschnecke, einen spitzen Winkel zueinander einschließen.

9. Anordnung nach einem der Ansprüche 5 bis 8,
**dadurch gekennzeichnet, dass** die im Wesentlichen in radialer Richtung ausgerichteten Linienabschnitte (14, 14') über einen Flächenbereich etwa quer zur Erstreckungsrichtung der Wendelflanke (24, 24') verlaufen, welche eine der Wendeln seitlich begrenzen.

10. Anordnung nach einem der Ansprüche 5 bis 9,
**dadurch gekennzeichnet, dass** die sich axial erstreckenden Linienabschnitte (12, 12') und die zu den sich axial erstreckenden Linienabschnitten jeweils versetzt ausgebildeten, im Wesentlichen radial ausgerichteten Linienabschnitte (14, 14') untereinander über tangential verlaufende Linienabschnitte (16, 16', 18, 18') verbunden sind.

11. Anordnung nach Anspruch 10,
**dadurch gekennzeichnet, dass** die tangential verlaufenden Linienabschnitte (16, 16', 18, 18') sich bereichsweise, zumindest parallel entlang einer Wendelaußenkante (26, 26'), welche die äußere Umfangsfläche (20) der Wendel (4, 4') von der Wendelflanke (24, 24') unterteilt, und entlang einer Wendelinnenkante erstrecken, welche den Grund (22) zwischen der oder den Wendeln (4, 4') von der Wendelflanke (24, 24') abgrenzt.

12. Anordnung nach einem der Ansprüche 1 bis 11,
**dadurch gekennzeichnet, dass** eine schraubenförmige Wendel (4, 4') einer ersten Förderschnecke (2), bezogen auf einen Längsschnitt durch die Förderschnecke, Wendelflanken (24, 24') mit einer konvexen Krümmung aufweist.

13. Anordnung nach einem der Ansprüche 1 bis 12,
**dadurch gekennzeichnet, dass** eine schraubenförmige Wendel (8, 8', 8") einer zweiten Förderschnecke (6) im Längsschnitt, entlang der sich in Längsrichtung aufspannenden Verbindungsebene, Wendelflanken (30, 30') mit einer konkaven Krümmung aufweist.

14. Vorrichtung zur Verarbeitung eines Lebensmittels, insbesondere zum Herstellen eines Stranges aus einer pastösen Masse,
mit einem Einlass, einem Auslass und einem sich zwischen dem Ein- und dem Auslass erstreckenden Förderweg, und
mit einer im Förderweg angeordneten Fördereinrichtung, welche zum Fördern des Lebensmittels vom Einlass in Richtung des Auslasses eingerichtet ist,
**dadurch gekennzeichnet, dass** die Fördereinrichtung eine Anordnung von Förderschnecken (2, 6) nach einem der Ansprüche 1 bis 13 aufweist.

15. Füllmaschine zum Herstellen von Würstchen aus einer pastösen Masse, wie Wurstbrät oder dergleichen,
mit einen Fülltrichter zum Aufnehmen der pastösen Masse,
einer Vorrichtung zum Verarbeiten eines Lebensmittels nach Anspruch 14,
mit einem Extrusionskopf zum Herstellen eines Stranges aus pastöser Masse, und
mit mindestens einer Abteileinrichtung zum Abteilen des geformten und mit einem Hüllmaterial überzogenen Stranges in einzelne Abschnitte unter Bildung einer Abteilstelle.

## Claims

1. An arrangement comprising two conveyor screws (2, 6) which are arranged rotatably moveably relative to each other for processing a pasty foodstuff product, having a first conveyor screw (2) and a second conveyor screw (6) which have interengaging helical flights (4, 4', 8, 8', 8") and which in particular are drivable in opposite relationship,
**characterised in that** the conveyor screws (2, 6) are of different size diameters and the conveyor screws (2, 6) have a different number of flights (4, 4', 8, 8', 8"), and
the surfaces of the interengaging flights (4, 4' 8, 8', 8") are so shaped and matched to each other that they are in contact with each other along a substantially continuous contact line (10) extending substantially in the longitudinal direction of both conveyor screws (2, 6) to hinder, preferably prevent a return flow of the pasty material.

2. An arrangement as set forth in claim 1 **characterised in that** the first conveyor screw (2) has two flights (4, 4') and the second conveyor screw (6) has three flights (8, 8', 8").

3. An arrangement as set forth in one of claims 1 and 2 **characterised in that** the second conveyor screw (6) is of a smaller outside diameter in comparison with the first conveyor screw (2).

4. An arrangement as set forth in one of claims 1 through 3 **characterised in that** the surfaces of the flights (4, 4', 8, 8', 8") are in contact with each other along the continuous contact line (10) in areal relationship or with common tangential planes.

5. An arrangement as set forth in claims 1 through 4 **characterised in that** the contact line (10) is composed of a plurality of line portions (12, 12', 14, 14', 16, 16', 18, 18') arranged in a row with each other, wherein the line portions (12, 12', 14, 14', 16, 16', 18, 18') extend relative to the axes of rotation (19) of the conveyor screws (2, 6) alternately at least in an approximately axial direction and substantially in a radial direction.

6. An arrangement as set forth in claim 5 **characterised in that** the axially extending line portions (12, 12') of the contact line (10) lie on a connecting plane defined by both axes of rotation (19) of the conveyor screws.

7. An arrangement as set forth in one of claims 5 and 6 **characterised in that** the axially extending line portions (12, 12') are respectively adapted to extend over surface regions of the outer peripheral surface (20) of the flights (4, 4') and a bottom (22) between the flights (4, 4') of a conveyor screw (2, 6).

8. An arrangement as set forth in one of claims 5 through 7 **characterised in that** the substantially radially oriented line portions (14, 14') of the contact line (10) are adapted to extend alternately displaced relative to both sides of the axially extending line portions (12, 12') in such a way that the radially oriented line portions include an acute angle relative to each other with respect to the axis of rotation (19) of a conveyor screw.

9. An arrangement as set forth in one of claims 5 through 8 **characterised in that** the line portions (14, 14') oriented substantially in the radial direction extend over a surface region approximately transversely relative to the direction in which the flight flank (24, 24') extends, which laterally delimit one of the flights.

10. An arrangement as set forth in one of claims 5 through 9 **characterised in that** the axially extending line portions (12, 12') and the substantially radially oriented line portions (14, 14') which are respectively provided in displaced relationship with the axially extending line portions are connected to each other by way of tangentially extending line portions (16, 16', 18, 18').

11. An arrangement as set forth in claim 10 **characterised in that** the tangentially extending line portions (16, 16', 18, 18') extend region-wise at least parallel along a flight outside edge (26, 26') which subdivides the outer peripheral surface (20) of the flight (4, 4') from the flight flank (24, 24') and along a flank inside edge which delimits the bottom (22) between the flight or flights (4, 4') from the flight flank (24, 24').

12. An arrangement as set forth in one of claims 1 through 11 **characterised in that** a helical flight (4, 4') of a first conveyor screw (2) has flight flanks (24, 24') with a convex curvature with respect to a longitudinal section through the conveyor screw.

13. An arrangement as set forth in one of claims 1 through 12 **characterised in that** a helical flight (8, 8', 8") of a second conveyor screw (6) has flight flanks (30, 30') with a concave curvature in longitudinal section along the connecting plane extending in the longitudinal direction.

14. Apparatus for processing a foodstuff, in particular for producing a string of a pasty material, comprising
an inlet, an outlet and a conveyor path extending between the inlet and the outlet, and
a conveyor device which is arranged in the conveyor path and which is adapted to convey the foodstuff from the inlet in the direction of the outlet,
**characterised in that** the conveyor device has an arrangement of conveyor screws (2, 6) as set forth in one of claims 1 through 13.

15. A filling machine for the production of small sausages from a pasty material like sausage meat or the like comprising
a filling hopper for receiving the pasty material,
an apparatus for processing a foodstuff as set forth in claim 14,
an extrusion head for producing a string of pasty material, and
at least one dividing device for dividing the shaped string covered with a casing material into individual portions with the formation of a division location.

## Revendications

1. Agencement de deux vis sans fin d'alimentation (2, 6) agencées mobiles en rotation l'une par rapport à l'autre pour le traitement d'un produit alimentaire pâteux, avec une première vis sans fin d'alimentation (2) et une deuxième vis sans fin d'alimentation (6), qui présentent des spirales hélicoïdales, s'engageant l'une dans l'autre (4, 4', 8, 8', 8") et en particulier pouvant être entraînées en sens opposés,
**caractérisé en ce que** les vis sans fin d'alimentation (2, 6) présentent des diamètres de différente taille et les vis sans fin d'alimentation (2, 6) ont un nombre différent de spirales (4, 4', 8, 8', 8"),
et que les surfaces des spirales s'engageant l'une dans l'autre (4, 4', 8, 8', 8") sont formées et adaptées l'une à l'autre de sorte qu'elles sont en contact l'une avec l'autre le long d'une ligne de contact sensiblement continue (10), laquelle s'étend sensiblement dans la direction longitudinale des deux vis sans fin d'alimentation (2, 6) pour empêcher de préférence un reflux de la masse pâteuse.

2. Agencement selon la revendication 1,
**caractérisé en ce que** la première vis sans fin d'alimentation (2) présente deux spirales (4, 4') et la deuxième vis sans fin d'alimentation (6) présente trois spirales (8, 8', 8").

3. Agencement selon l'une quelconque des revendications 1 et 2,
**caractérisé en ce que** la deuxième vis sans fin d'alimentation (6) présente un diamètre extérieur plus petit que la première vis sans fin d'alimentation (2).

4. Agencement selon l'une quelconque des revendications 1 à 3,
**caractérisé en ce que** les surfaces des spirales (4, 4', 8, 8', 8") sont en contact l'une avec l'autre avec des plans tangents communs ou en surface le long de la ligne de contact continue (10).

5. Agencement selon la revendication 1 à 4,
**caractérisé en ce que** la ligne de contact (10) se compose de plusieurs sections de ligne juxtaposées (12, 12', 14, 14', 16, 16', 18, 18'), dans lequel les sections de ligne (12, 12', 14, 14', 16, 16', 18, 18') s'étendent, par rapport aux axes de rotation (19) des vis sans fin d'alimentation (2, 6), alternativement au moins dans une direction à peu près axiale et sensiblement dans une direction radiale.

6. Agencement selon la revendication 5,
**caractérisé en ce que** les sections de ligne s'étendant axialement (12, 12') de la ligne de contact (10) se situent sur un plan de liaison défini par les deux axes de rotation (19) des vis sans fin d'alimentation.

7. Agencement selon l'une quelconque des revendications 5 et 6,
**caractérisé en ce que** les sections de ligne s'étendant axialement (12, 12') sont réalisées en s'étendant respectivement sur des zones de surface de la surface périphérique extérieure (20) des spirales (4, 4') et d'un fond (22) entre les spirales (4, 4') d'une vis sans fin d'alimentation (2, 6).

8. Agencement selon l'une quelconque des revendications 5 à 7,
**caractérisé en ce que** les sections de ligne orientées sensiblement radialement (14, 14') de la ligne de contact (10) sont réalisées en s'étendant de manière alternativement décalée par rapport aux deux côtés des sections de ligne s'étendant axialement (12, 12') de telle sorte que les sections de ligne orientées radialement forment un angle aigu l'un par rapport à l'autre par rapport à l'axe de rotation (19) d'une vis sans fin d'alimentation.

9. Agencement selon l'une quelconque des revendications 5 à 8,
**caractérisé en ce que** les sections de ligne orientées sensiblement dans une direction radiale (14, 14') s'étendent sur une zone de surface à peu près transversalement à la direction d'extension du flanc de spirale (24, 24'), lesquelles délimitent latéralement une des spirales.

10. Agencement selon l'une quelconque des revendications 5 à 9,
**caractérisé en ce que** les sections de ligne s'étendant axialement (12, 12') et les sections de ligne orientées sensiblement radialement (14, 14'), réalisées de manière respectivement décalée par rapport aux sections de ligne s'étendant axialement sont reliées entre elles par le biais de sections de ligne s'étendant de manière tangente (16, 16', 18, 18').

11. Agencement selon la revendication 10,
**caractérisé en ce que** les sections de ligne s'étendant de manière tangente (16, 16', 18, 18') s'étendent par zone, au moins parallèlement le long d'une arête extérieure de spirale (26, 26'), laquelle divise la surface périphérique extérieure (20) de la spirale (4, 4') du flanc de spirale (24, 24'), et le long d'une arête intérieure de spirale, laquelle délimite le fond (22) entre la ou les spirales (4, 4') du flanc de spirale (24, 24').

12. Agencement selon l'une quelconque des revendications 1 à 11,
**caractérisé en ce qu'**une spirale hélicoïdale (4, 4') d'une première vis sans fin d'alimentation (2) présente, par rapport à une coupe longitudinale de la vis sans fin d'alimentation, des flancs de spirale (24, 24') avec une courbure convexe.

13. Agencement selon l'une quelconque des revendications 1 à 12,
**caractérisé en ce qu'**une spirale hélicoïdale (8, 8', 8") d'une deuxième vis sans fin d'alimentation (6) présente dans la coupe longitudinale, le long du plan de liaison défini dans la direction longitudinale, des flancs de spirale (30, 30') avec une courbure concave.

14. Dispositif de transformation d'un aliment, en particulier pour la fabrication d'un cordon en masse pâteuse,
avec une entrée, une sortie et un trajet de transport s'étendant entre l'entrée et la sortie, et
avec un dispositif de transport disposé dans le trajet de transport, lequel est aménagé pour le transport de l'aliment de l'entrée vers la sortie,
**caractérisé en ce que** le dispositif de transport présente un agencement de vis sans fin d'alimentation (2, 6) selon l'une quelconque des revendications 1 à 13.

15. Machine de remplissage pour la fabrication de saucisses en masse pâteuse, comme de la chair à saucisse ou similaire,
avec une trémie de remplissage pour la réception de la masse pâteuse,
un dispositif de transformation d'un aliment selon la revendication 14,
avec une tête d'extrusion pour la fabrication d'un cordon en masse pâteuse, et avec au moins un dispositif de séparation pour séparer le cordon formé et recouverte d'un matériau d'enveloppe en différentes sections en formant un point de séparation.
